# EUROPÄISCHE PATENTSCHRIFT

(11) **EP 0 913 711 B1**
(45) Veröffentlichungstag und Bekanntmachung des Hinweises auf die Patenterteilung: **14.04.2004**
(21) Anmeldenummer: 98119373.3
(22) Anmeldetag: 14.10.1998
(51) Int. Cl.: G01V 15/00

(54) **Identifizierungselement und Verfahren zu seiner Herstellung**
Identification element and method for its manufacture
Elément d'identification et méthode pour sa fabrication

(30) Priorität: 03.12.1997 DE 19753619; 29.10.1997 WO PCT/EP97/05975
(43) Veröffentlichungstag der Anmeldung: 06.05.1999
(73) Patentinhaber: Meto International GmbH, 69434 Hirschhorn/Neckar (DE)
(72) Erfinder: Altwasser, Richard, 76684 Forst (DE)
(74) Vertreter: Menges, Rolf, Dipl.-Ing.

(56) Entgegenhaltungen:
- EP-A- 0 682 321
- WO-A-97/12263
- FR-A- 2 344 965
- US-A- 4 567 473
- PATENT ABSTRACTS OF JAPAN vol. 008, no. 200 (E-266), 13. September 1984 & JP 59 089440 A (MATSUSHITA DENKI SANGYO KK), 23. Mai 1984

## Beschreibung

Die Erfindung betrifft ein Identifizierungselement mit einer integrierten Schaltung und zumindest einer mit der integrierten Schaltung verbundenen Antennenspule, die aus zumindest einer Lage einer metallischen Schicht besteht (RFID-Transponder). Außerdem betrifft die Erfindung ein Verfahren zur Herstellung eines derartigen Identifizierungselements. Der Vorteil von RFID-Transpondern gegenüber den insbesondere im Bereich der Warenauszeichnung vornehmlich eingesetzten Barcodes besteht darin, daß sie einen direkten Austausch von Informationen erlauben, d. h., es ist kein Sichtkontakt zwischen Abfragevorrichtung und Transponder für die Informationsübermittlung erforderlich. Darüber hinaus ist es bei RFID-Transpondern im Gegensatz zu Barcodes problemlos möglich, deren Informationsinhalt bei Bedarf unmittelbar zu ändern.

RFID-Transponder sind entweder als passive oder als aktive Elemente ausgestaltet. Wird der RFID-Transponder als aktives Element verwendet, ist in dem Gehäuse, das den integrierten Schaltkreis einschließt, eine zusätzliche Energiequelle, üblicherweise in Form einer Batterie, enthalten. RFID-Transponder können in den unterschiedlichsten Frequenzbereichen arbeiten, z.B. im Niederfrequenzbereich bei 125 kHz, im mittleren Frequenzbereich bei 13,56 MHz oder im Mikrowellenbereich, typischerweise bei 2,45 GHz. Die vorliegende Erfindung bezieht sich vorzugsweise -aber keineswegs ausschließlich- auf passive Transponder, die im mittleren Frequenzbereich arbeiten.

Aus der EP-A-0 682 321, von der der Anspruch 1 im Oberbegriff ausgeht, ist ein Datenträger mit integriertem Schaltkreis bekannt. Der Datenträger besteht aus einem Kartenkörper und einem integrierten Schaltkreis, der elektrisch über Kontaktelemente mit wenigstens einer Spule verbunden ist, die aus einer oder aus mehreren Schichten aufgebaut ist. Beide Elemente bilden zusammen einen Resonanzschwingkreis, der bei einer vorgegebenen Resonanzfrequenz.arbeitet. Die Spule dient der Energieversorung und/oder dem Datenaustausch des integrierten Schaltkreises mit externen Geräten. Schaltkreis und Kontaktelemente sind als separates Modul ausgestaltet.

Der Nachteil der bekannten RFID-Transponder gegenüber Barcodes besteht in einem eklatanten Preisunterschied beider Elemente. Dies ist auch der Grund dafür, daß RFID-Transponder bis heute auf dem Verkaufssektor nur in Randbereichen eingesetzt werden. Insbesondere wurde bislang von einer Bereitstellung von Preisinformation oder sonstiger Information mittels RFID-Transpondern beim Verkauf von Massenwaren in Kaufhäusern und Lagern Abstand genommen. Bislang liegen die Kosten eines RFID-Transponders im Bereich von 10 DM, weshalb ihr Einsatz als Einwegkennzeichnungen natürlich vollkommen indiskutabel ist.
RFID-Transponder können natürlich in den unterschiedlichsten Bereichen zur Anwendung kommen, insbesondere im Bereich der Herstellung, der Weiterverarbeitung und des Transports von Waren, ebenso im Bereich von Sicherheitsanwendungen. Beispielhaft seien die Kennzeichnung von Menschen und Tieren, die Kennzeichnung von Gepäckstücken, insbesondere an Flughäfen oder bei der Post, und die Kennzeichnung von Fahrzeugen bei der Fahrzeugherstellung oder in Parkhäusern genannt. Es ist ferner bekannt, dass ein Kondensator, der aus zwei zumindest teilweise überlappenden Spulen aus Metallfolie besteht, eine Toleranz von 3% und weniger aufweist. Hingegen hat ein Kondensator, der in einen Halbleiter-Schaltkreis integriert ist, eine Toleranz von 20% und mehr. Wenn in diesem Fall der Schaltkreis den Hauptbeitrag zur Gesamtkapazität leistet, muss eine Abstimmung des Resonanzschwingkreises vorgenommen werden, nachdem der integrierte Schaltkreis mit der Spule verbunden worden ist, um eine Toleranz von akzeptablen 5% zu erreichen.

Der Erfindung liegt die Aufgabe zugrunde, ein kostengünstiges Identifizierungs. element und ein Verfahren zur Herstellung eines derartigen Identfizierungselements vorzuschlagen.

Die Aufgabe wird bezüglich des Identifizierungselements dadurch gelöst, daß es sich bei der integrierten Schaltung um einen unverkapselten Chip (also einen integrierten Schaltkreis ohne Gehäuse) handelt und daß die Antennenspule ungefähr 80% der Gesamtkapazität bereitstellt, während der geringene Teil der Kapazität von dem integrierten Schaltkreis bzw. Chip herrührt. Die Kosteneinsparung wird beim erfindungsgemäßen Identifizierungselement zunächst auf zweifache Weise erreicht: einerseits kann auf die relative teuere Einkapselung des Chips in ein Gehäuse verzichtet werden, und andererseits kommt eine preiswerte und dennoch optimal arbeitende und sehr gute Anpassungsmöglichkeiten bietende Antennenspule zur Anwendung. In diesem Zusammenhang hat es sich als sehr vorteilhaft herausgestellt, wenn die Antennenspule aus einer ausgestanzten Metallfolie aus kostengünstigem Aluminium oder aber aus Kupfer gefertigt ist. Kupfer hat den Vorteil, daß es eine hervorragende Leitfähigkeit besitzt und darüber hinaus sehr gut mit anderen Materialien verbunden werden kann. Erfindungsgemäß trägt die Antennenspule den Hauptanteil (ca. 80%) zur Kapazität bei, so dass sich die Toleranz von 5% ohne nachträgliche Abstimmung erzielen läßt.
Sollte es sich im Einzelfall als notwendig erweisen, kann die Frequenz der Antennenspule natürlich auch noch abgestimmt werden, nachdem der integrierte Schaltkreis mit der Antennenspule kontaktiert worden ist. Diese Abstimmung wird z.B. durch eine Änderung der Kapazität oder der Induktivität erreicht. Eine Änderung der Kapazität kann auch durch eine Abstandsänderung von zwei Lagen der Antennenspule unter lokaler Wärmezufuhr erfolgen. Weiterhin ist es möglich, die Größe der Kondensatorfläche nachträglich zu ändern. Als Fazit bleibt festzuhalten, daß die Einsparung eines Abstimmkondensators im Schaltkreis zu einer Kostenreduktion des erfindungsgemäßen RFID-Transponders beiträgt.

Selbstverständlich kann die Spule auch durch Aufdrucken einer elektrisch leitenden Tinte (z.B. polymere Tinte mit Silberpartikeln), durch Ätzen einer Spule auf chemischem Wege oder durch eine Drahtwicklung realisiert werden. Bevorzugt wird aber das mechanische Ausstanzen der Spule aus einer entsprechenden Metallfolie, da diese Methode sowohl hinsichtlich der Herstellungskosten als auch im Hinblick auf die Umweltschutzbestimmungen die größten Vorteile bietet.

Metallfolien zur Fertigung der Spule haben im Normalfall eine Dicke von weniger als 100 µm, vorzugsweise liegt die Dicke zwischen 20 und 50 µm. Die Verwendung dieser sehr dünnen und flexiblen Folien als Spulenmaterial bringt den zusätzlichen Vorteil, daß das Endprodukt, also der fertige RFID-Transponder, ebenfalls flexibel und dünn ist und sich damit hervorragend für die Verwendung in der Etikettenfertigung eignet. Da die Oberflächenwelligkeit des Etiketts durch die Integration einer dünnen Spule gleichfalls vernachlässigbar gering ist, läßt sich die nahezu glatte Oberfläche des Etiketts in gewohnter Weise bedrucken.

Gemäß einer vorteilhaften Ausgestaltung des erfindungsgemäßen Identifizierungselement ist der unverkapselte Chip mit der Antennenspule über eine in der Halbleiterfertigung angewandte Kontaktierungsmethode verbunden, z.B. unter Verwendung von leitfähigen Klebern, durch Verlöten, mittels der FlipChip-Methode, usw. Derartige Methoden sind in dem Buch Electronics Engineer's Reference Book, 6. Auflage, "Integrated circuit packaging", auf den Seiten 25/14 bis 25/21, ausführlich beschrieben.

Eine weitere vorteilhafte Ausgestaltung des erfindungsgemäßen Identifizierungselements sieht vor, daß die Antennenspule derart ausgestaltet ist, daß sie einen Resonanzschwingkreis bildet. Ein Verfahren, wie derartige Resonanzschwingkreise kostengünstig und mit hoher Präzision, d.h. geringen Toleranzschwankungen hinsichtlich ihrer Güte, hergestellt werden können, ist in der EP-A-0 665 705 offenbart.

Nach dem in der EP-A-0 665 705 beschriebenen Verfahren hergestellte Resonanzschwingkreise zeichnen sich durch sehr geringe Fertigungstoleranzen aus. Die Toleranzen hinsichtlich der Kapazität liegen bei den ausgestanzten Antennenspulen bei ca. 3%, wohingegen Kondensatoren, die auf einem Halbleiterchip gefertigt sind, eine Herstellungstoleranz von ca. 20% aufweisen. Aufgrund dieses Umstandes ist es besonders vorteilhaft, wenn die Kapazität im wesentlichen durch die Antennenspule bestimmt ist und nicht durch den Schaltkreis. In diesem Fall kann nämlich auf einen Abstimmkondensator im Chip selbst verzichtet werden, da eine nachträgliche Abstimmung der Kapazität der Antennenspule aufgrund der relativ geringen Toleranzen im allgemeinen nicht mehr erforderlich ist. Es ist klar, daß auch die Einsparung eines Abstimmkondensators dazu beiträgt, die Herstellungskosten für den erfindungsgemäßen RFID-Transponder gering zu halten.

Gemäß einer weiteren vorteilhaften Ausgestaltung des erfindungsgemäßen Identifizierungselements ist die Güte des Schwingkreises, also der Q-Faktor größer als 50. Hierdurch kann die Kommunikation mit dem RFID-Transponder auf einen größeren Raumbereich ausgedehnt werden.

Die Gesamtkapazität der Antennenspule ist maßgeblich dafür verantwortlich, wie sensibel das Identifizierungselement auf statische Aufladungen durch in der Nähe plazierte kapazitive Körper, z.B. eine Hand, eine Flasche mit wäßriger Flüssigkeit oder eine Schicht aus Plastikmaterial, reagiert. Je niedriger die Kapazität ist, um so eher wird der Resonanzschwingkreis durch derartige statische Aufladungen verstimmt. Betrachten wir noch einmal den Unterschied, der sich hier bei.den üblichen Kondensatoren in integrierten Schaltkreisen und der Antennenspule ergibt, die erfindungsgemäß zu Einsatz kommt. Wird die Kapazität völlig über den integrierten Schaltkreis bereitgestellt, so liegt sie üblicherweise im Bereich von 10 bis 100 pF. Derartige Resonanzschwingkreise lassen sich relativ einfach verstimmen, wodurch der Abfragebereich in äußerst nachteiliger Weise erheblich eingeschränkt wird. Im Falle der vorliegenden Erfindung wird - wie bereits gesagt - der Großteil der Gesamtkapazität von der Antennenspule geliefert. Typischerweise hat diese eine Kapazität von 500 pF bis 5 nF, so daß eine Verstimmung des Resonanzschwingkreises z.B. infolge einer statischen Aufladung durch Körperkontakt nahezu ausgeschlossen werden kann.

Gemäß einer weiteren vorteilhaften Ausgestaltung des erfindungsgemäßen Identifizierungselements ist ein zusätzlichen Speicherkondensator mit einer Kapazität im Bereich von 1 nF vorgesehen, der genügend Energie speichert, um den Transponder im Bedarfsfall zu aktivieren. Die in dem Kondensator gespeicherte Energie stammt von dem Abfragesignal der Sendevorrichtung. Die vorgenannte Kapazität des Kondensators läßt sich -wie im Falle der Antennenspule selbst- dadurch erreichen, daß zumindest zwei teilweise überlappende Metallschichten durch zumindest eine dielektrische Schicht voneinander getrennt sind. Wie im Falle der Antennenspule führt diese Art der Fertigung zu einer Kosteneinsparung beim erfindungsgemäßen RFID-Transponder. Neben der kostengünstigen Fertigung hat die besondere Ausgestaltung des zusätzlichen Speicherkondensators den Vorteil, daß seine Kapazität um einen Faktor 10 höher liegt als die Kapazität eines entsprechenden Kondensators auf einem Halbleiterchip. Die hierdurch zur Verfügung stehende höhere Energie vergrößert die Datenübertragungskapazität des Identifizierungselements natürlich ganz erheblich.

Vorzugsweise wird das erfindungsgemäße Identifizierungselement gleichzeitig als Sicherungselement für die elektronische Artikelsicherung verwendet. In diesem Fall ist ein Resonanzfrequenz-Sicherungselement vorgesehen, das eine von der Resonanzfrequenz des Identifizierungselements abweichende Resonanzfrequenz aufweist, wobei das Resonanzfrequenz-Sicherungselement auf das Abfragefeld einer elektronischen Artikelüberwachungsvorrichtung abgestimmt ist und ein charakteristischen Signal aussendet, sobald es durch die Artikelüberwachungsvorrichtung zu Resonanzschwingungen angeregt wird. Ein derartiges System ist beispielsweise aus der EP-B-0 181 327 bekannt. Die Abfragefrequenzen für das Resonanzfrequenz-Sicherungselement liegen im Normalfall bei 8,2 MHz; die Abfragefrequenz des Identifizierungselements könnte beispielsweise im Bereich von 13,56 MHz angesiedelt sein.

Gemäß einer besonders günstigen Ausgestaltung sind das erfindungsgemäße Identifizierungselement und für den Fall, daß ein solches überhaupt vorhanden ist, das Resonanzfrequenz-Sicherungselement auf einem Trägermaterial angeordnet. Bei diesem Trägermaterial handelt es sich um Papier oder um ein synthetisches Material. Beide Trägermaterialien werden den Anforderungen, die an Etiketten zu stellen sind, gerecht: sie sind dünn, flexibel, gut bedruckbar und kostengünstig. Plastikmaterial hat darüber hinaus den Vorteil, daß es resistent ist im Hinblick auf Kontakt mit Wasser oder mit chemischen Substanzen.

Die Aufgabe wird hinsichtlich des erfindungsgemäßen Verfahrens dadurch gelöst, daß ein unverkapselter Chip mit zumindest einer Antennenspule kontaktiert wird, die aus zumindest einer Lage einer metallischen Schicht besteht.

Gemäß einer vorteilhaften Ausgestaltung des erfindungsgemäßen Verfahrens wird vorgeschlagen, daß die Kontaktierung zwischen Chip und Antennenspule mittels aus der Halbleiterfertigung bekannt gewordener Methoden erfolgt.

Die Erfindung wird anhand der nachfolgenden Figuren näher erläutert. Es zeigt
Fig. 1: eine Draufsicht auf eine erste Antennenspule, die beim erfindungsgemäßen RFID-Transponder eingesetzt wird,
Fig. 2: eine Draufsicht auf zwei Antennenspulen, die in bestimmten Bereichen überlappen,
Fig. 3: eine Draufsicht auf die beiden Antennenspulen aus Fig. 2, wobei die Antennenspulen in bestimmten Bereichen elektrisch miteinander verbunden sind und
Fig. 4: eine Draufsicht auf eine vorteilhafte Ausgestaltung des erfindungsgemäßen RFID-Transponders.

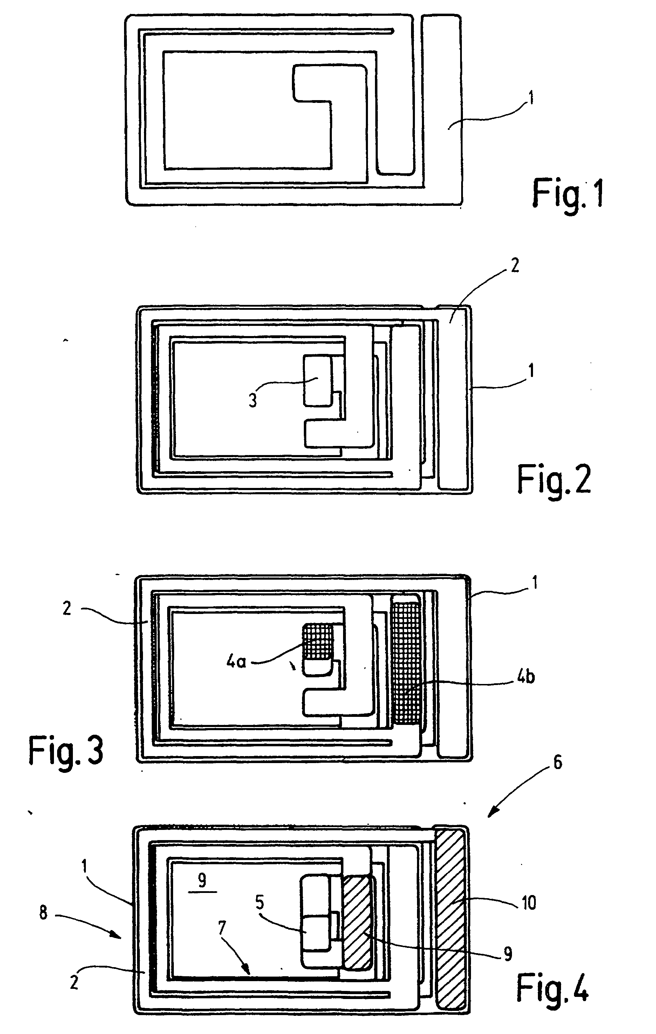

Fig. 1 zeigt eine Draufsicht auf eine erste Antennenspule 1, die bei einem erfindungsgemäßen RFID-Transponder 6 eingesetzt wird. Sie besteht aus zwei Spulenwindungen, wobei die äußere Spulenwindung in vergleich zur inneren Spulenwindung in die entgegengesetzte Richtung gewunden ist. Wie aus Fig. 2 ersichtlich ist, ist eine zweite Antennenspule 2, deren Form der ersten Antennenspule 1 im wesentlichen entspricht, um 180° gedreht über der ersten Antennenspule 1 angeordnet. Beide Antennenspulen 1, 2 sind im Überlappungsbereich durch eine in Fig.2 nicht dargestellte dielektrische Schicht voneinander getrennt. Vorzugsweise sind beide Antennenspulen 1, 2 aus einer Aluminiumfolie ausgestanzt. Die Fertigung des in Fig. 2 dargestellten Resonanzschwingkreises erfolgt vorzugsweise, wie bereits an vorhergehender Stelle erwähnt, mittels des in der EP-A-0 655 705 beschriebenen Verfahrens. Die erste Antennenspule 1 weist noch einen zusätzlichen Abschnitt 3 auf, der - wie aus Fig. 4 ersichtlich ist- der Kontaktierung der Antennenspule 1 mit dem Chip 5 dient.

In Fig. 3 sind wiederum die in Fig. 2 dargestellten Antennenspulen 1, 2 gezeigt, wobei die Antennenspulen 1, 2 nunmehr jedoch in bestimmten Bereichen 4a, 4b elektrisch miteinander verbunden sind. Durch die elektrische Verbindung in den Bereichen 4a, 4b werden zwei Schwingkreise geschaffen, die vorzugsweise in unterschiedlichen Frequenzbereichen zu Resonanzschwingungen angeregt werden.

Fig. 4 zeigt eine vorteilhafte Ausgestaltung des erfindungsgemäßen RFID-Transponders 6, bestehend aus einem Identifizierungselement 7 und einem Sicherungselement 8 für die elektronische Diebstahlsicherung. Der innere Resonanzschwingkreis und der elektrisch mit ihm verbundene Chip 5 bilden das Identifizierungselement 7. Die Resonanzfrequenz dieses Schwingkreises liegt beispielsweise bei ca. 13,56 MHz. Die Verbindung zwischen Chip 5 und innerem Resonanzschwingkreis erfolgt über eine der Kontaktierungsmethoden, die aus der Halbleitertechnologie bekannt sind.
Der äußere Resonanzschwingkreis bildet das elektronische Sicherungselement 8. Das Sicherungselement 8 wird im Abfragefeld einer Artikelüberwachungsvorrichtung zur Aussendung eines charakteristischen Signals angeregt. Typischerweise liegt die Abfragefrequenz einer Artikelüberwachungsvorrichtung im Bereich von 8,2 MHz, weicht also im gewählten Beispiel von der Frequenz des RFID-Transponders 6 ab. Wie aus Fig. 4 weiterhin ersichtlich ist, sind sowohl die erste Antennenspule 1 als auch die zweite Antennenspule 2 mit dem Chip elektrisch verbunden.
Die schraffierten Gebiete 9, 10 des Resonanzschwingkreises für das Identifizierungslement 7 und des Resonanzschwingkreises für das Sicherungselement 8 kennzeichnen jeweils den Bereich, der den Hauptanteil zur Gesamtkapazität jedes Schwingkreises beisteuert. Sollte eine nachträgliche Abstimmung der Schwingkreise erforderlich sein, wird sie bevorzugt in den Gebieten 9, 10 stattfinden. Bezüglich geeigneter Abstimmverfahren wird auf die bereits zuvor beschriebenen Textpassagen hingewiesen.

## Patentansprüche

1. Identifizierungselement mit einer integrierten Schaltung und zumindest einer mit der integrierten Schaltung verbundenen Antennenspule, die aus zumindest einer Lage einer metallischen Schicht besteht,
**dadurch gekennzeichnet,**
**daß** es sich bei der integrierten Schaltung um einen unverkapselten Chip (5) handelt und daß der Hauptanteil von 80% der Gesamtkapazität über die Antennenspule (1; 2) bereitgestellt ist, während der geringere Anteil der Kapazität von der integrierten Schaltung bzw. dem Chip (5) herrührt.

2. Identifizierungselement nach Anspruch 1,
**dadurch gekennzeichnet,**
**daß** die Antennenspule (1 ; 2) derart ausgestaltet ist, daß sie einen Resonanzschwingkreis (7; 8) bildet.

3. Identifizierungselement nach Anspruch 1 oder 2,
**dadurch gekennzeichnet,**
**daß** der Chip (5) mit der Antennenspule (1; 2) über eine in der Halbteiterfertigung angewandte Kontaktierung verbunden ist.

4. Identifizierungselement nach einem oder mehreren der vorhergehenden Ansprüche,
**dadurch gekennzeichnet,**
**daß** die Güte des Resonanzschwingkreises (7; 8), also der Q-Faktor größer als 50 ist.

5. Identifizierungselement nach einem der Ansprüche 1 bis 4,
**dadurch gekennzeichnet,**
**daß** die Kapazität des Resonanzschwingkreises (7; 8) zwischen 500 pF und 5 nF liegt.

6. Identifizierungselement nach einem der Ansprüche 1 bis 5,
**dadurch gekennzeichnet,**
**daß** ein zusätzlicher Speicherkondensator mit einer Kapazität von 1nF vorgesehen ist, um den Chip (5) im Bedarfsfall zu aktivieren.

7. Identifizierungselement nach einem der Ansprüche 1 bis 6,
**dadurch gekennzeichnet,**
**daß** ein Resonanzfrequenz-Sicherungselement (8) vorgesehen ist, das eine von der Resonanzfrequenz des Identifizierungselements (7) abweichende Resonanzfrequenz aufweist, wobei das Resonanzfrequenz-Sicherungselement (8) auf das Abfragefeld einer elektronischen Artikelüberwachungsvorrichtung abgestimmt ist und geeignet ist, ein charakteristischen Signal auszusenden, sobald es durch die Artikelüberwachungsvorrichtung zu Resonanzschwingungen angeregt wird.

8. Identifizierungselement nach einem der Ansprüche 1 bis 7,
**dadurch gekennzeichnet,**
**daß** Identifizierungselement (7) und/oder Resonanzfrequenz-Sicherungselement (8) auf einem Trägermaterial (11) angeordnet sind.

9. Verfahren zur Herstellung eines Identifizierungselements nach einem der Ansprüche 1 bis 8,
**dadurch gekennzeichnet,**
**daß** ein unverkapselten Chip (5) mit zumindest einer Antennenspule (1; 2) kontaktiert wird, die aus zumindest einer Lage einer metallischen Schicht besteht.

10. Verfahren nach Anspruch 9,
**dadurch gekennzeichnet,**
**daß** die Kontaktierung zwischen Chip (5) und Antennenspule (1; 2) mittels aus der Halbleiterfertigung bekannt gewordener Methoden erfolgt.

## Claims

1. An identification element having an integrated circuit and at least one antenna coil connected to the integrated circuit and comprised of at least one layer of a metallic coating,
**characterized in that** the integrated circuit is a non-encapsulated chip (5), and that the major proportion of 80% of the total capacitance is made available via the antenna coil (1; 2), while the lesser proportion of the capacitance originates from the integrated circuit, that is, the chip (5).

2. The identification element as claimed in claim 1,
**characterized in that** the antenna coil (1; 2) is constructed to form a resonant circuit (7; 8).

3. The identification element as claimed in claim 1 or 2,
**characterized in that** the chip (5) is connected to the antenna coil (1; 2) by means of a bonding employed in the production of semiconductors.

4. The identification element as claimed in one or more of the preceding claims,
**characterized in that** the quality of the resonant circuit (7; 8), that is, the Q-factor, is greater than 50.

5. The identification element as claimed in any of claims 1 to 4,
**characterized in that** the capacitance of the resonant circuit (7; 8) lies between 500 pF and 5 nF.

6. The identification element as claimed in any of claims 1 to 5,
**characterized in that** an additional storage capacitor having a capacitance of 1 nF is provided to activate the chip (5) as needed.

7. The identification element as claimed in any of claims 1 to 6,
**characterized in that** a resonant frequency security element (8) is provided having a resonant frequency that differs from the resonant frequency of the identification element (7), said resonant frequency security element (8) being tuned to the interrogating field of an electronic article surveillance device and being suitable for emitting a characteristic signal as soon as it is incited to resonate by the article surveillance device.

8. The identification element as claimed in any of claims 1 to 7,
**characterized in that** the identification element (7) and/or the resonant frequency security element (8) are arranged on a substrate (11).

9. A method of manufacturing an identification element as claimed in any of claims 1 to 8,
**characterized in that** a non-encapsulated chip (5) is bonded with at least one antenna coil (1; 2) comprised of at least one layer of a metallic coating.

10. The method as claimed in claim 9,
**characterized in that** the bonding between the chip (5) and the antenna coil (1; 2) is performed by means of the methods known from the production of semiconductors.

## Revendications

1. Elément d'identification comportant un circuit intégré et au moins une bobine-antenne reliée audit circuit intégré et constituée par au moins une couche d'une feuille métallique,
**caractérisé en ce que** le circuit intégré est une puce (5) non encapsulée et **en ce que** la part majeure de 80 % de la capacité totale est fournie moyennant la bobine-antenne (1; 2), la part mineure de la capacité étant fournie par le circuit intégré respectivement la puce (5).

2. Elément d'identification selon la revendication 1,
**caractérisé en ce que** la bobine-antenne (1; 2) est conçue de façon à former un circuit oscillant à résonance (7; 8).

3. Elément d'identification selon la revendication 1 ou 2,
**caractérisé en ce que** la puce (5) est reliée à la bobine-antenne (1; 2) grâce à des moyens de mise en contact tels qu'ils sont connus de la production des semi-conducteurs.

4. Elément d'identification selon l'une ou plusieurs des revendications précédentes,
**caractérisé en ce que** la qualité du circuit oscillant à résonance (7; 8), donc le facteur Q, est supérieur à 50.

5. Elément d'identification selon l'une des revendications 1 à 4,
**caractérisé en ce que** la capacité du circuit oscillant à résonance (7; 8) est comprise entre 500pF et 5 nF.

6. Elément d'identification selon l'une des revendications 1 à 5,
**caractérisé en ce qu'**un condenseur de puissance supplémentaire ayant une capacité de 1 nF est prévu pour activer la puce (5) en cas de besoin.

7. Elément d'identification selon l'une des revendications 1 à 6,
**caractérisé en ce qu'**un élément de protection (8) à fréquence de résonance est prévu, celui-ci présentant une fréquence de résonance autre que la fréquence de résonance de l'élément d'identification (7), l'élément de protection (8) à fréquence de résonance étant accordé au champ de détection d'un dispositif électronique de surveillance d'articles et adapté pour délivrer un signal caractéristique dès qu'il est incité à des oscillations résonantes par le dispositif électronique de surveillance d'articles.

8. Elément d'identification selon l'une des revendications 1 à 7,
**caractérisé en ce que** l'élément d'identification (7) et/ou l'élément de protection (8) à fréquence de résonance sont agencés sur un support (11).

9. Procédé de fabrication d'un élément d'identification selon l'une des revendications 1 à 8,
**caractérisé en ce qu'**une puce (5) non encapsulée est mise en contact avec au moins une bobine-antenne (1; 2) constituée par au moins une couche d'une feuille métallique.

10. Procédé selon la revendication 9,
**caractérisé en ce que** la mise en contact de la puce (5) et de la bobine-antenne (1; 2) est obtenue grâce aux procédés connus de la production de semi-conducteurs.
